# EUROPÄISCHE PATENTANMELDUNG

(11) **EP 1 591 938 A2**
(43) Veröffentlichungstag der Anmeldung: **02.11.2005**
(21) Anmeldenummer: 05009289.9
(22) Anmeldetag: 28.04.2005
(51) Int. Cl.: G06F 17/60

(54) **Email-System mit integrierten Funktionen**

(30) Priorität: 30.04.2004 DE 102004021815
(71) Anmelder: Web.De AG, 76227 Karlsruhe (DE)
(72) Erfinder: Greve, Michael, 76227 Karlsruhe (DE); Cotte, Pierre-Alain, 76227 Karlsruhe (DE)
(74) Vertreter: Schultenkämper, Johannes

(57) **Zusammenfassung**

Die Erfindung betrifft ein Email-System, welches Email-Nachrichten bereitstellt, die über eine oder mehrere integrierte Funktionen verfügen. Bekannt ist es bereits, eine Email im HTML-Format zu erstellen und mit Bedienelementen zu versehen.

Mit der vorliegenden Erfindung wird ein Email-System vorgeschlagen, welches Email-Nachrichten bereitstellt, die über eine oder mehrere integrierte Funktionen verfügen, wobei die integrierten Funktionen auch Nicht-Email bezogene Funktionen, insbesondere Telekommunikationsfunktionen wie Telefonie-, Fax-, SMS- oder MMS-Funktionen umfassen und/oder zugriffsbeschränkende Funktionen umfassen.

## Beschreibung

Die Erfindung betrifft ein Email-System, welches Email-Nachrichten bereitstellt, die über eine oder mehrere integrierte Funktionen verfügen.

Es ist es bereits bekannt (US 2002/017931) Email im HTML-Format zu erstellen und mit Bedienelementen zu versehen.

Mit der vorliegenden Erfindung wird ein Email-System vorgeschlagen, welches Email-Nachrichten bereitstellt, die über eine oder mehrere integrierte Funktionen verfügen, wobei die integrierten Funktionen auch Nicht-Email bezogene Funktionen, insbesondere Telekommunikationsfunktionen wie Telefonie-, Fax-, SMS-oder MMS-Funktionen umfassen und/oder zugriffsbeschränkende Funktionen umfassen.

Die Erfindung wird nun anhand von Ausführungsbeispielen und unter Bezugnahmen auf die beiliegenden Figuren näher beschrieben:
Fig. 1 zeigt ein erstes Beispiel einer erfindungsgemäßen Email-Nachricht mit mehreren integrierten Funktionen,
Fig. 2 zeigt ein zweites Beispiel einer erfindungsgemäßen Email-Nachricht mit Passwortabfrage.

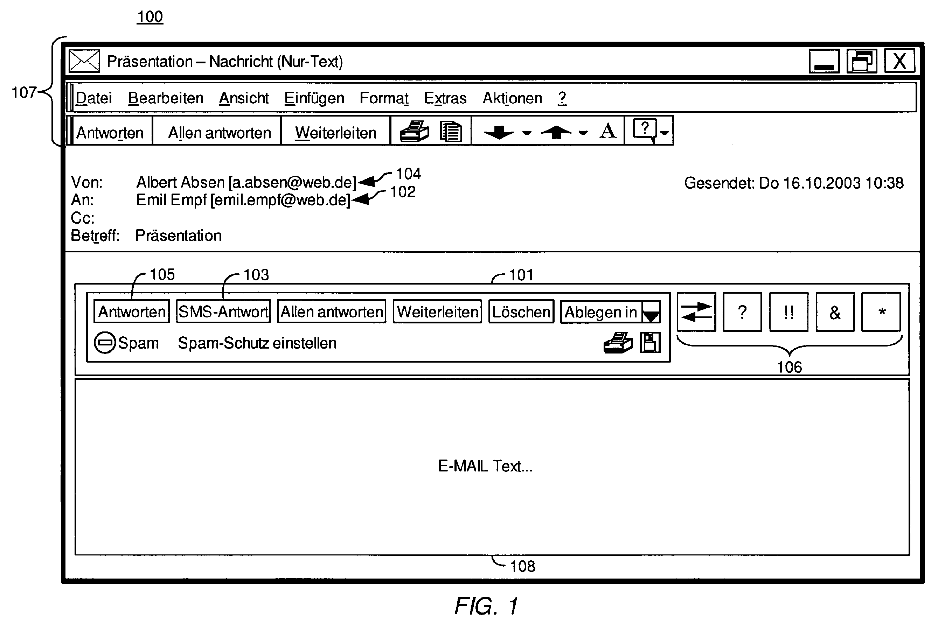

Die Figur 1 zeigt eine Email-Nachricht 100, die mittels eines herkömmlichen Email Programms, wie Eudora® oder Microsoft Outlook®, geöffnet wurde. Dieses Email-Programm stellt dem Empfänger 102 der Email-Nachricht 100 die in der Leiste 107 dargestellten Funktionalitäten zur Bearbeitung der Email-Nachricht 100 zur Verfügung. Somit werden bereits Bedienfunktionen bereitgestellt. Diese sind aber abhängig von dem jeweils verwendeten Email Programm.

Die Email-Nachricht 100 ist vorzugsweise eine HTML-Email und verfügt selbst über Bedienelemente, die beispielsweise als Schaltflächen (Button) 105, 104 und 106 ausgebildet sind. Diese befinden sich z.B. in einer in die Email integrierten graphische Leiste 101. Über diese Schaltflächen kann der Empfänger 102 der Email-Nachricht 100, in diesem Fall "Emil Empf", verschiedene Funktionen auslösen. Zum Beispiel stellt die Leiste 101 dem Email-Empfänger noch weitere Funktionalitäten wie "Weiterleiten", "Löschen", "Ablegen", etc. zur Verfügung.

Erfindungsgemäß werden nun Email-untypische Funktionen, insbesondere Telekommunikationsfunktionen, bereit gestellt. So kann er z.B. über die Schaltfläche "SMS-Antwort" 103 dem Absender 104 der Email-Nachricht 100, hier "Albert Absen", eine SMS-Nachricht als Antwort auf die Email-Nachricht 100 übermitteln. Bevorzugt kommen hier Telekommunikations-funktionen in Frage, die das erwähnte konventionelle Email-Programm mit seiner Leiste 107 nicht bietet, wie zum Beispiel: Anrufen des Absenders per Telefon, Fax an den Absender schicken, die Website des Absenders besuchen, etc.

Mit den integrierten Bedienelementen, hier mit den Button 103, 105 und 106, kann dem Empfänger unabhängig von dem verwendeten Email-Programm oder anderen Applikations-Programmen, die der Empfänger zur Verfügung hat, alle angebotenen Funktionen steuern. Die Bedienelemente werden auf der Senderseite in die Email integriert. Dabei bestimmt der Absender (hier: Albert Absen), welche Funktionen er dem Empfänger (hier: Emil Empf) zur Verfügung stellen will. Der Absender kontrolliert also die Art und den Umfang der für den Empfänger bereitgestellten Funktionen. Das geschieht mittels einer serverbasierten Lösung, so wie dies nachfolgend näher beschrieben wird:

Die beschriebenen Funktionalitäten werden von einem Server durchgeführt, mit dem durch Einbettung von Links in die Email der Empfänger verbunden wird. Der Server ist vorzugsweise Teil des Messaging Systems, welches die Email-Nachricht 100 an den Empfänger leitet. Auf der Empfangsseite kann durch das Anklicken einer der verlinkten Schaltflächen der Leiste 101 eine entsprechende Anfrage bei dem Server ausgelöst werden. Der Server führt dann anhand dieser Anfrage die entsprechende vom Empfänger gewünschte Funktion aus (z.B. Telefonrückruf zum Absender aufbauen).

Außerdem kann der Absender auch den Zugriff und die Nutzung der empfangenen Nachricht bestimmen, insbesondere beschränken:
In der Email-Nachricht 100 wird der eigentliche Email Text in einem Fenster oder auch Container 108 angezeigt. Mit diesem Container 108 ist es möglich, die Verfügung des Empfängers über den Textinhalt zu kontrollieren oder einzuschränken. Beispielsweise ist die Größe des Containers begrenzt, so dass nur ein Kurztext Textanfang dargestellt wird. Um den Volltext sehen zu können, müsste der Empfänger auf einen Button klicken und somit einen (möglicherweise kostenpflichtigen) Download des Volltextes starten. Der Kurztext könnte in Englisch geschrieben sein, der Volltext steht zum Download in mehreren Sprachen zur Verfügung, wobei der Empfänger keine zusätzlichen Programme benötigt.

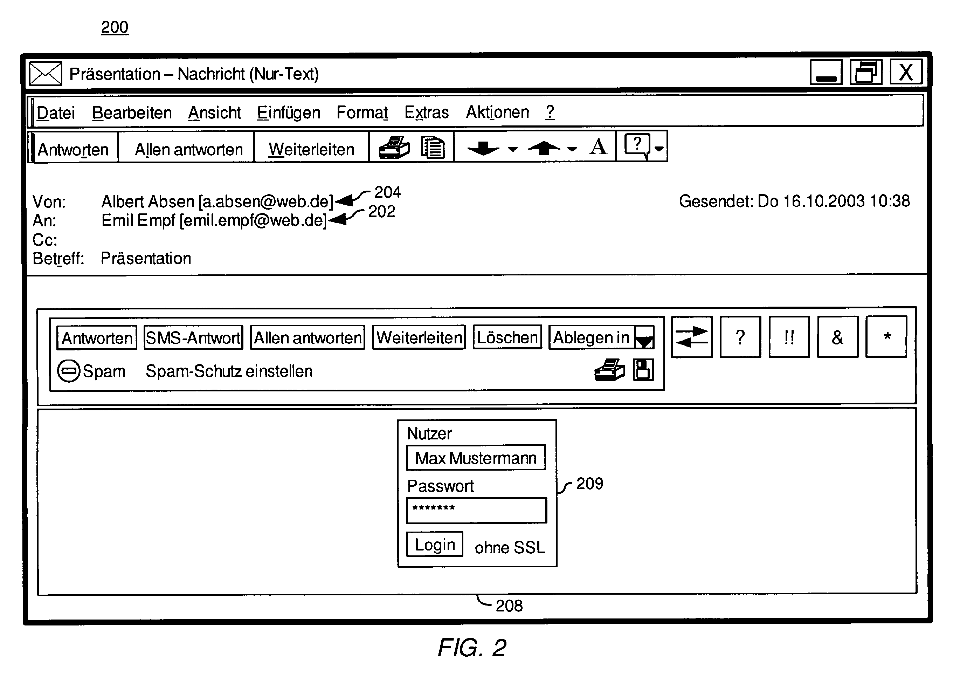

Ein weiteres Beispiel ist in Figur 2 dargestellt:
Bei der Email-Nachricht 200 der Figur 2 enthält der Container 208 lediglich ein leeres Feld anstatt des Email Textes. Damit der Empfänger 202 (Emil Empf) den Text lesen kann, muss er sich zunächst über ein Dialogfeld 209 identifizieren. Dieses Dialogfeld wird im Container 208 sofort beim Öffnen der Email-Nachricht 200 angezeigt. In das Dialogfeld 209 muss der Empfänger zunächst seinen Nutzernamen und sein Passwort eingeben, erst danach kann er den Inhalt der Email lesen, z.B. in einem separaten Fenster oder er erhält dann eine der in Fig. 1 entsprechend dargestellte Ansicht.

Der separate Container 208 kann auch so programmiert werden, dass nur einmaliges Lesen der Nachricht erlaubt wird.

Insgesamt bieten die in die Email integrierten Bedienelemente eine große Vielzahl von weiteren Möglichkeiten, wie z.B.:
keine Weiterleitung der E-Mail zulassen,
Digital Rights Management starten,
Möglichkeiten zur Coupon Ausstellung,
Möglichkeiten der Lesebenachrichtigung an den Absender der E-Mail,
etc...

Die in die Email-Nachrichten 100 und 200 integrierten Funktionalitäten, d.h. die Schaltflächenleiste 101 und der Container 108, 208, werden vom Absender 104, 204 der Email-Nachricht ausgewählt und werden vom Messaging System auf der Sendeseite in die Email-Nachricht integriert. Dazu verfügt der Absender über eine nicht dargestellte Anwendung (einen "Builder"), die es diesem ermöglicht, einfach per Klick zu sagen, welche Funktionalitäten der ausgehenden Email-Nachricht hinzugefügt werden sollen.

Die beschriebenen Funktionalitäten werden von einem Server, der Teil des Messaging Systems ist, durchgeführt. Von dem Server werden auch die Email-Nachrichten 100 und 200 an den Empfänger geleitet. Auf der Empfangsseite kann durch das Anklicken einer der Schaltflächen der Leiste 101 eine entsprechende Anfrage bei dem Server ausgelöst werden. Der Server führt dann anhand dieser Anfrage die entsprechende vom Empfänger gewünschte Funktion aus (z.B. Telefonrückruf zum Absender aufbauen).

Durch diese serverbasierte Lösung kann der Absender dem Empfänger der Email-Nachricht verschiedenste Funktionalitäten unabhängig davon bereitstellen, welches Email-Programm oder weitere Applikationen und welchen Computer der Empfänger zur Verfügung hat. Somit kann der Absender die ausgehende Email-Nachricht auch mit Funktionen versehen, die ein herkömmliches Email-Programm nicht anbietet, insbesondere solche Funktionen, die herkömmlicher Weise (siehe Leiste 107 in der Fig. 1) nicht vorgesehen sind.

## Patentansprüche

1. Email-System, welches Email-Nachrichten bereitstellt, die über eine oder mehrere integrierte Funktionen verfügen, **dadurch gekennzeichnet, dass** die integrierten Funktionen auch Nicht-Email bezogene Funktionen, insbesondere Telekommunikationsfunktionen wie Telefonie-, Fax-, SMS- oder MMS-Funktionen umfassen und/oder zugriffsbeschränkende Funktionen umfassen.

2. Email-System nach Anspruch 1, **dadurch gekennzeichnet, dass** das Email-System dem Empfänger einer Email-Nachricht (100) die besagten integrierten Funktionen mittels Bedienelementen (105, 103, 106) unabhängig davon zur Verfügung stellt, mit welcher Anwendung der Empfänger die Email-Nachricht (100) liest.

3. Email-System nach Anspruch 1 oder 2, **dadurch gekennzeichnet, dass** das Email-System in die Email-Nachricht (100) mindestens eine Verknüpfungen (Links) einbettet, die zu einem Server führt, der Applikationen entsprechend den besagten Funktionen ausführt.

4. Email-System nach Anspruch 2 und 3, **dadurch gekennzeichnet, dass** das Email-System Email-Nachrichten (100) im HTML-Format bereitstellt, in denen die Verknüpfungen als Hyperlinks einbettet, die den als Schaltflächen (105, 103, 101) ausgebildeten Bedienelementen zugeordnet sind.

5. Email-System nach einem der vorhergehenden Ansprüche, **dadurch gekennzeichnet, dass** zumindest ein Teil der Bedienelemente als Eingabefeld, insbesondere als Einlog-Feld (209) ausgebildet ist.

6. Email-System nach einem der vorhergehenden Ansprüche, **dadurch gekennzeichnet, dass** die Telekommunikationsfunktionen wie Telefonie-, Fax-, SMS- oder MMS-Funktionen ein Mittel darstellen, um eine Telefon-, Fax-, SMS- oder MMS-Kommunikation aus einer Email-Nachricht heraus einzuleiten, insbesondere in Antwort auf die Email-Nachricht.

7. Email-System nach einem der vorhergehenden Ansprüche, **dadurch gekennzeichnet, dass** die zugriffsbeschränkenden Funktionen die Möglichkeiten eines Email-Empfängers einschränken, über die empfangene Email-Nachricht zu verfügen.

8. Email-System nach Anspruch 7, **dadurch gekennzeichnet, dass** die zugriffsbeschränkenden Funktionen dem Email-Empfänger nur ein einmaliges Lesen der Email-Nachricht erlauben und/oder keine Weiterleitung der Email-Nachricht erlauben und/oder den Inhalt der Email-Nachricht durch ein Passwort schützen.

9. Verfahren zum Bereitstellen von Funktionen innerhalb einer Email-Nachricht, **dadurch gekennzeichnet, dass** innerhalb der Email-Nachricht eine oder mehrere integrierte Nicht-Email bezogene Funktionen, insbesondere Telekommunikationsfunktionen wie Telefonie-, Fax-, SMS- oder MMS-Funktionen, und/oder zugriffsbeschränkende Funktionen bereitgestellt werden.
